# DEMANDE DE BREVET EUROPEEN

(11) **EP 4 198 283 A1**
(43) Date de publication de la demande: **21.06.2023**
(21) Numéro de dépôt: 22213214.4
(22) Date de dépôt: 13.12.2022
(51) Int. Cl.: F02C 7/047, B64D 15/12, B64D 33/02, F02C 7/045

(54) **DISPOSITIF DE CHAUFFAGE À MATELAS CHAUFFANT POUR UN SYSTÈME DE PROTECTION CONTRE LE GIVRE D'UN AÉRONEF**

(30) Priorité: 20.12.2021 FR 2113967
(71) Demandeur: AIRBUS OPERATIONS (S.A.S.), 31060 Toulouse (FR)
(72) Inventeur: LANOUETTE, Cédric, 93440 DUGNY (FR); PORTE, Alain, 31060 TOULOUSE (FR); BOURHIS, Arnaud, 31060 TOULOUSE (FR); DOBIGEON, Franck, 31060 TOULOUSE (FR); LALANE, Jacques, 31060 TOULOUSE (FR); PONS, François, 31060 TOULOUSE (FR)
(74) Mandataire: Airbus-OPS SAS

(57) **Abrégé**

- Dispositif de chauffage à matelas chauffant pour un système de protection contre le givre d'un aéronef.
- Le matelas chauffant (5) pour un dispositif de chauffage, en particulier d'un système de protection contre le givre, comporte au moins une bande chauffante (6) pourvue d'au moins une résistance noyée dans un matériau thermiquement et électriquement isolant et configurée pour être alimentée électriquement, le matelas chauffant (5) présentant par exemple une forme en U comprenant un fond (21) allongé pourvu de la ou des bandes chauffantes (6) et deux branches d'extrémité (22, 23) pourvues chacune d'au moins un élément de connexion électrique (24) lié à la ou aux résistances de la ou des bandes chauffantes (6), ce matelas chauffant (5), pris individuellement ou combiné à d'autres matelas chauffants (5) du même type, permet d'obtenir une grande variété de dispositifs de chauffage différents destinés à mettre en oeuvre des fonctions de dégivrage et/ou d'antigivrage.

## Description

### Domaine technique

La présente invention concerne un matelas chauffant pour un dispositif de chauffage d'un système de protection contre le givre d'un aéronef, et un dispositif de chauffage pourvu d'au moins un tel matelas chauffant ainsi qu'un système de protection contre le givre comprenant au moins un tel dispositif de chauffage.

### Etat de la technique

On sait que les bords d'attaque des aéronefs, en particulier les lèvres d'entrée d'air des nacelles de moteur des aéronefs, peuvent subir la formation de givre qui peut s'accumuler pour constituer des blocs de glace. L'apparition de tels blocs de glace peut perturber l'alimentation en air du moteur. De plus, des blocs de glace peuvent se détacher et venir heurter les pales de la soufflante du moteur.

Pour limiter et/ou éliminer cette formation de givre, il est connu, par exemple du document EP 3 552 969, de prévoir dans chaque nacelle des moteurs de l'aéronef un système de protection contre le givre. Le système de protection contre le givre comporte un dispositif d'antigivrage et un dispositif de dégivrage destinés à agir sur des segments différents de l'entrée d'air. En particulier, à l'entrée d'air, un premier secteur pourvu d'un dispositif d'antigivrage est alimenté en continu pour empêcher la formation de givre et un deuxième secteur pourvu d'un dispositif de dégivrage, qui est situé dans la lèvre de l'entrée d'air, est alimenté selon un cycle de chauffe approprié, permettant dans un premier temps la formation de givre, puis dans un second temps son décollement.

Pour réaliser le chauffage, on prévoit, aussi bien pour le dispositif d'antigivrage que pour le dispositif de dégivrage, des matelas chauffants comprenant des éléments résistifs chauffants. Ces matelas chauffants doivent donc pouvoir être adaptés, à la fois, à des dispositifs différents et à des secteurs différents de l'entrée d'air.

Il existe donc un besoin de disposer de matelas chauffants adaptables aptes à être utilisés pour mettre en oeuvre les différentes fonctions (de dégivrage et d'antigivrage), aux endroits ou secteurs souhaités, dans un système de protection contre le givre.

### Exposé de l'invention

La présente invention concerne un matelas chauffant (ou matelas thermique) pour un dispositif de chauffage, en particulier d'un système de protection contre le givre notamment d'une nacelle d'aéronef, qui permet de répondre à ce besoin.

Pour ce faire, selon l'invention, le matelas chauffant comporte au moins une bande chauffante pourvue d'au moins une résistance noyée dans un matériau thermiquement et électriquement isolant et configurée pour être alimentée électriquement.

Dans un mode de réalisation préféré, le matelas chauffant comprend un fond allongé pourvu de la ou des bandes chauffantes et, à chaque extrémité, au moins un élément de connexion électrique lié à la ou aux résistances de la ou des bandes chauffantes. Le matelas chauffant (ainsi que le fond comprenant la ou les bandes chauffantes) peuvent présenter des formes variées, notamment une forme plane ou une forme arrondie (ou courbe), comme par exemple une sinusoïde, une forme convexe ou une forme concave. La forme peut être adaptée au support sur lequel le matelas chauffant doit être appliqué. Dans une réalisation particulière, le fond du matelas chauffant est courbe, de préférence avec un rayon de courbure constant de manière à correspondre à un arc de cercle. Le matelas chauffant peut également présenter une forme en U.

Le matelas chauffant ainsi réalisé est adaptable, individuellement ou en étant lié à d'autres matelas, à des zones (ou secteurs) de tailles et/ou de courbures différentes sur lesquelles il doit être agencé pour réaliser un chauffage. De plus, en utilisant plusieurs matelas chauffants présentant des caractéristiques différentes, on peut réaliser des chauffages différents pour mettre en oeuvre les fonctions de dégivrage et/ou d'antigivrage telles que souhaitées.

Avantageusement la bande chauffante présente au moins l'une des caractéristiques suivantes :
- elle comporte, sur une face avant, une couche protectrice qui présente une conductivité thermique et qui sert de protection contre l'érosion ;
- elle comporte, sur une face arrière, une couche structurelle et d'isolation thermique ;
- la résistance est formée d'au moins un pli unidirectionnel de fibres ou de bande métallique;
- le matériau isolant est un composite renforcé à base de verre ou d'aramide.

Dans un mode de réalisation préféré, le matelas chauffant comporte une pluralité de bandes chauffantes adjacentes, et notamment trois bandes chauffantes dont chacune est alimentée, de préférence, par l'un des courants électriques d'un courant triphasé.

Par ailleurs, de façon avantageuse, le matelas chauffant comporte entre deux bandes chauffantes adjacentes, à chaque fois, l'un des éléments suivants :
- une zone isolante ;
- une zone perforée.

La présente invention concerne également un dispositif de chauffage à matelas chauffant pour un système de protection contre le givre.

Selon l'invention, ledit dispositif de chauffage comporte au moins un matelas chauffant tel que celui décrit ci-dessus.

Dans un mode de réalisation préféré, le dispositif de chauffage comporte une pluralité de matelas chauffants pourvus chacun d'un fond courbe, les matelas chauffants étant liés ensemble via leurs branches d'extrémité. Ces matelas chauffants, lorsqu'ils sont courbes avec un même rayon de courbure, forment alors ensemble un arc de cercle ou un anneau.

Dans ce cas, avantageusement :
- au moins certains des matelas chauffants sont connectés (liés ensemble) électriquement ; et/ou
- au moins certains des matelas chauffants sont isolés électriquement les uns par rapport aux autres.

De préférence, au moins certains des matelas chauffants comprennent trois bandes chauffantes et chacune desdites bandes chauffantes est alimentée par l'un des trois courants électriques d'un système de courant triphasé.

Avantageusement, le dispositif de chauffage comporte, de plus, au moins une source d'alimentation électrique et au moins un contrôleur, le contrôleur étant lié à la source d'alimentation électrique et étant configuré pour commander l'alimentation électrique du ou des matelas chauffants.

La présente invention concerne également un système de protection contre le givre, en particulier d'une nacelle de moteur d'aéronef, ce système de protection contre le givre comprenant au moins l'un des dispositifs suivants : au moins un dispositif d'antigivrage, au moins un dispositif de dégivrage.

Selon l'invention, ledit système de protection contre le givre comporte au moins un dispositif de chauffage à matelas chauffant tel que décrit ci-dessus, qui correspond à un dispositif d'antigivrage ou à un dispositif de dégivrage.

Avantageusement, le système de protection contre le givre comporte une pluralité de dispositifs de chauffage agencés côte à côte, par exemple le long d'une partie d'une nacelle d'un moteur d'aéronef.

La présente invention concerne également une nacelle d'un moteur d'un aéronef, en particulier d'un avion de transport, qui comporte au moins un matelas chauffant et/ou au moins un dispositif de chauffage et/ou au moins un système de protection contre le givre, tels que ceux décrits ci-dessus.

Dans un mode de réalisation particulier, la nacelle comporte au moins un panneau d'atténuation acoustique comprenant au moins une structure acoustique pourvue d'une peau poreuse, ladite peau poreuse comportant au moins un matelas chauffant (à zones perforées).

### Brève description des figures

Les figures annexées feront bien comprendre comment l'invention peut être réalisée. Sur ces figures, des références identiques désignent des éléments semblables.
La figure 1 est le schéma synoptique d'un mode de réalisation particulier d'un dispositif de chauffage à matelas chauffant.
La figure 2 est une vue partielle, en coupe longitudinale, d'une entrée d'air d'une nacelle de moteur d'aéronef.
La figure 3 est une vue partielle, en perspective, d'un aéronef pourvu d'un moteur.
La figure 4 est une vue schématique, en coupe, d'un premier mode de réalisation d'un matelas chauffant.
La figure 5 est une vue schématique, en coupe, d'un second mode de réalisation d'un matelas chauffant, destiné à un panneau acoustique.
La figure 6 est une vue schématique, légèrement en perspective, d'un matelas chauffant tel que celui de la figure 4.
La figure 7 est une vue schématique, légèrement en perspective, d'un matelas chauffant tel que celui de la figure 5.
La figure 8 est une vue en perspective d'un matelas chauffant à trois bandes chauffantes, en forme de U.
La figure 9 est une vue partielle, en perspective, d'une extrémité du matelas chauffant de la figure 8.
La figure 10 est une vue partielle, en perspective, d'une extrémité du matelas chauffant de la figure 8, vue de dessous.
La figure 11 est une vue partielle, en perspective, d'une extrémité d'un ensemble de trois matelas chauffants agencés côte-à-côte et pourvus d'une couche d'isolation thermique externe.
La figure 12 est une vue similaire à celle de la figure 11 avec les trois matelas chauffants pourvus d'une couche d'isolation thermique interne.
La figure 13 est une représentation schématique d'un premier mode de réalisation d'une nappe chauffante d'un dispositif de chauffage, en forme d'arc de cercle, à trois matelas chauffants liés ensemble.
La figure 14 est une représentation schématique d'un second mode de réalisation d'une nappe chauffante d'un dispositif de chauffage, de forme annulaire, à six matelas chauffants liés ensemble.
La figure 15 est une vue schématique d'une connexion électrique entre deux matelas chauffants adjacents, via un contact direct d'éléments de connexion.
La figure 16 est une vue schématique d'une connexion électrique entre deux matelas chauffants adjacents, par l'intermédiaire d'un fil électrique.
La figure 17 est une vue en perspective d'une partie d'une entrée d'air d'une nacelle de moteur d'aéronef, pourvue d'une pluralité de dispositifs chauffants.
La figure 18 est une vue d'une partie basse de la partie d'entrée d'air de la figure 15.

### Description détaillée

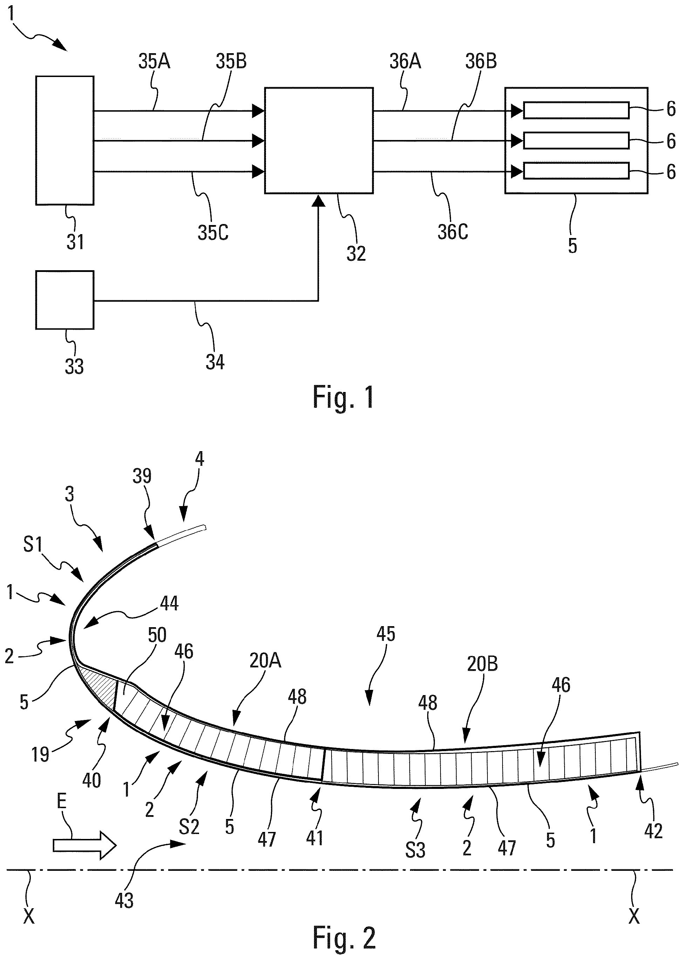

Le dispositif de chauffage 1 représenté schématiquement dans un mode de réalisation particulier sur la figure 1 et permettant d'illustrer l'invention est un dispositif de chauffage à matelas chauffant.

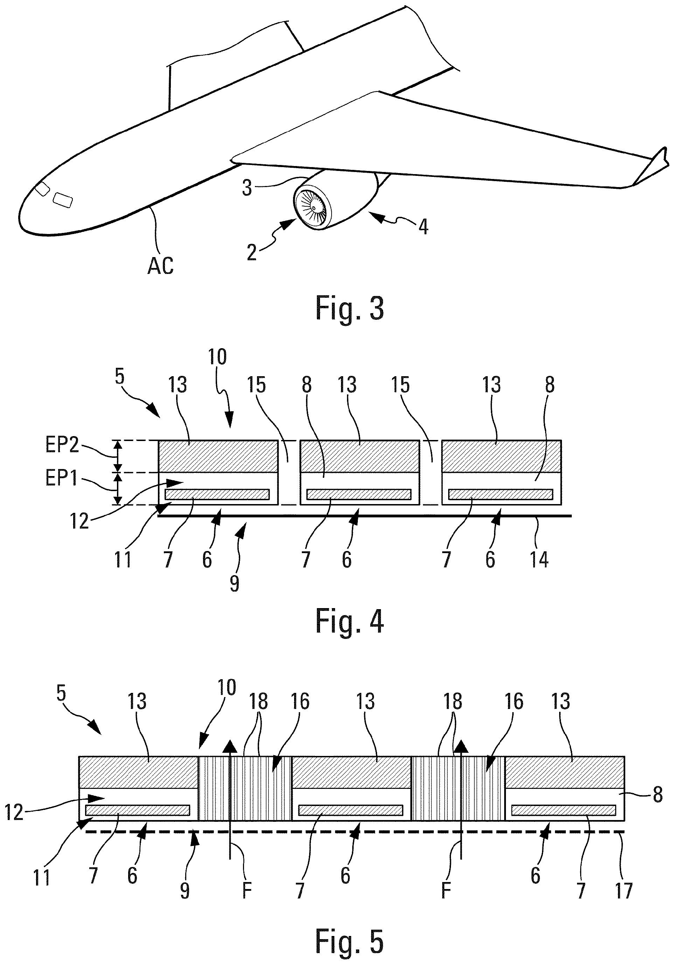

Bien que non exclusivement, le dispositif de chauffage 1 est particulièrement approprié à un système 2 de protection contre le givre (figure 2) d'une nacelle 3 d'un moteur 4 (par exemple un turboréacteur ou un turbopropulseur) d'un aéronef AC, comme représenté partiellement sur la figure 3. Le système 2 de protection contre le givre est décrit plus en détail ci-dessous.

Comme représenté sur la figure 4, le matelas chauffant (ou matelas thermique) 5 comporte au moins une bande chauffante 6. Chaque bande chauffante 6 est pourvue d'au moins une résistance (électrique) 7 noyée dans un matériau 8 électriquement isolant, dit matériau isolant ci-après. Cette résistance (électrique) 7 est apte à être alimentée électriquement, comme précisé ci-dessous, pour générer un chauffage (c'est-à-dire une augmentation de la température).

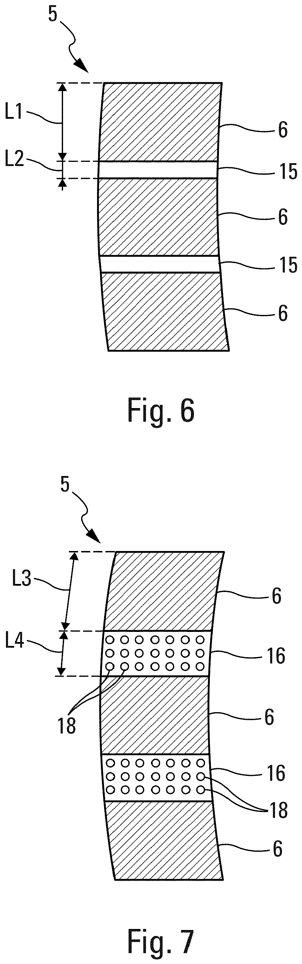

Dans le mode de réalisation préféré de la figure 4, ainsi que de la figure 6, le matelas chauffant 5 comporte trois bandes chauffantes 6.

Dans un mode de réalisation préféré, chaque résistance 7 est formée d'au moins un pli majoritairement unidirectionnel de fibres, par exemple de carbone, noyé dans la résine formant ledit matériau isolant 8. La résistance 7 peut également être réalisée à partir de métal, par exemple en cuivre.

La résistance 7 peut également comporter une pluralité de plis majoritairement unidirectionnels de fibres, noyé dans la résine formant le matériau isolant, en particulier si on souhaite augmenter la capacité de chauffage du matelas chauffant 5.

Dans un mode de réalisation préféré, le matériau isolant 8 est un composite renforcé à base de verre de type GFRP (pour « Glass Fiber Reinforced Plastic ») ou d'aramide. Dans le cadre de la présente invention, d'autres matières peuvent bien entendu être utilisées pour réaliser le matériau isolant 8.

Dans la description suivante, on entend par « avant » le côté 9 vers lequel le matelas chauffant 5 doit réaliser le chauffage, et par « arrière » le côté 10 opposé au côté 9 du matelas chauffant 5.

La résistance (électrique) 7 est noyée dans le matériau (électriquement et également thermiquement) isolant 8 de telle sorte que, pour chaque bande 6 :
- vers l'avant, subsiste une zone 11 de matériau (thermiquement et électriquement) isolant 8 de faible épaisseur qui est apte à couvrir complètement la résistance 7, tout en limitant l'isolation thermique vers l'avant où doit être réalisé le chauffage ; et
- vers l'arrière, subsiste une zone 12 de matériau (thermiquement) isolant 8 d'épaisseur plus importante que celle de la zone 11. Cette zone 12 permet de réaliser une isolation thermique sur la face arrière au niveau de laquelle n'est pas réalisé de chauffage. Cette zone 12 permet également de focaliser le rayonnement thermique vers la face avant.

Pour obtenir une isolation thermique supplémentaire à l'arrière, chacune des bandes chauffantes 6 du matelas chauffant 5 comporte, sur la face arrière, une couche arrière 13. Cette couche arrière 13 est à la fois une couche structurelle et une couche d'isolation thermique. De préférence, la couche arrière 13 est réalisée en un plastique renforcé à base de graphite ou en un plastique renforcé à base de carbone.

À titre d'illustration, pour l'exemple de la figure 4, le matériau isolant 8 peut présenter une épaisseur EP1 de l'ordre de 2 mm et la couche arrière 13 peut également présenter une épaisseur EP2 de l'ordre de 2 mm. Plus généralement :
- l'épaisseur EP1 peut, par exemple, être comprise entre 0,3 et 6 mm ; et
- l'épaisseur EP2 peut, par exemple, être comprise entre 0,5 et 6 mm.

Le matelas chauffant 5 comporte, de plus, sur la face avant, une couche protectrice 14 qui présente une conductivité thermique. Cette couche protectrice 14 qui est, par exemple, réalisée par un procédé de type PVD (pour « Physical Vapor Déposition » en anglais) ou par électrodéposition, sert notamment à protéger le matelas chauffant 5 contre l'érosion, contre le givre et contre d'autres impacts potentiels, tout en étant thermiquement conductrice.

Dans le mode de réalisation particulier, représenté sur les figures 4 et 6, les bandes chauffantes 6 sont séparées les unes des autres par des zones isolantes 15. Ces zones isolantes 15 (agencées à chaque fois entre deux bandes chauffantes 6 successives) permettent notamment d'éviter la génération d'un arc électrique entre deux bandes chauffantes 6 successives (ou adjacentes).

Comme précisé ci-dessous, le matelas chauffant 5 tel que décrit en référence aux figures 4 et 6, est destiné à être appliqué à une zone de la nacelle 3 où doit être réalisé un chauffage, mais pas de traitement acoustique.

À titre d'illustration, la largeur L1 (figure 6) des bandes chauffantes 6 du matelas chauffant 5 peut être comprise entre 2 mm et 30 mm, et est de préférence de l'ordre de 6 mm, et la largeur L2 entre deux bandes chauffantes 6 adjacentes, c'est-à-dire la largeur L2 des zones isolantes 15, peut être comprise entre 1 et 10 mm et est de préférence de l'ordre de 5 mm.

Les zones isolantes 15 correspondent à des zones de discontinuité contrôlée. La largeur L2 des zones isolantes 15 est déterminée pour les rendre transparentes d'un point de vue thermique. Plus précisément, pour obtenir la transparence thermique (ou continuité thermique) souhaitée, la largeur L2 est déterminée de manière à ce que, par conduction thermique, la surface d'une zone isolante 15 donnée reçoive de l'énergie thermique des deux bandes chauffantes 6 directement adjacentes (de part et d'autre). Ainsi, la largeur L2 est optimisée, à la fois, pour ne pas être trop grande (afin d'éviter une rupture de la continuité thermique) et pour ne pas être trop petite (afin d'éviter un risque de surchauffe en cas d'éventuelle panne du matelas chauffant, s'il est allumé en permanence).

Le matelas 5, tel que décrit ci-dessus, comporte donc au moins une résistance 7 placée au plus près de la zone, notamment une paroi 19 (figure 2), à réchauffer. Cette résistance 7 est noyée dans le matériau isolant 8. L'épaisseur du matériau isolant 8 à l'arrière 12 de la résistance (avant la couche arrière 13 structurelle) permet de concentrer le rayonnement thermique généré par la résistance 7 vers la zone ou la paroi à réchauffer.

Par ailleurs, dans un mode de réalisation particulier, représenté sur la figure 5, le matelas chauffant 5 est destiné à être agencé sur un panneau acoustique 20A, 20B (figure 2), en remplacement d'une peau perforée usuelle, comme précisé ci-dessous.

Dans un mode de réalisation particulier, ce matelas chauffant 5 de la figure 5 est similaire au matelas chauffant 5 de la figure 4, excepté au moins pour les deux caractéristiques suivantes :
- au lieu de zones isolantes 15, le matelas chauffant 5 de la figure 5 comporte des zones perforées 16, entre deux bandes chauffantes 6 adjacentes (ou successives) ; et
- il comporte sur la face avant, au lieu de la couche protectrice 14, une couche protectrice 17 (anti-érosion) qui est également perforée.

Les zones perforées 16 pourvues de perforations (ou trous ou canaux) 18 du matelas chauffant 5 sont destinées à laisser passer les ondes acoustiques (ou ondes sonores), comme illustré par des flèches F sur la figure 5. Les perforations 18 peuvent présenter des formes variées, par exemple rondes, oblongues, ..., ou quelconques. Ces zones perforées 16 sont perforées de perforations (ou trous) 18 de diamètre compris, par exemple, entre 0,3 mm et 1,5 mm. Elles permettent aux ondes acoustiques présentes sur la face avant du matelas chauffant 5, de traverser le matelas chauffant 5 (flèches F) et de pénétrer à l'arrière dans le panneau acoustique 20A, 20B (figure 2) où elles sont atténuées par le panneau acoustique 20A, 20B, comme décrit plus en détail ci-dessous.

Dans un mode de réalisation particulier, le taux de surface ouverte TSO, c'est-à-dire le pourcentage de la surface globale de l'ensemble des perforations 18 par rapport à la surface totale de la face avant du matelas chauffant 5, est compris entre 1 et 10 % et est de préférence de l'ordre de 5 ou 6 %. Ce taux TSO peut bien entendu être adapté à l'application envisagée, et notamment au panneau acoustique 20A, 20B sur lequel le matelas chauffant 5 est monté.

Les zones perforées 16 correspondent à des zones de discontinuité contrôlée. La largeur L4 des zones perforées 16 est déterminée pour les rendre, à la fois, transparentes d'un point de vue thermique et transparentes d'un point de vue acoustique lorsque le matelas chauffant est agencé sur une zone de traitement acoustique, comme précisé ci-dessous. Plus précisément, pour obtenir la transparence thermique (ou continuité thermique) souhaitée, la largeur L4 est déterminée de manière à ce que, par conduction thermique, la surface d'une zone perforée 16 donnée reçoive de l'énergie thermique des deux bandes chauffantes 6 directement adjacentes (de part et d'autre). Ainsi, la largeur L4 est optimisée, à la fois, pour ne pas être trop grande (afin d'éviter une rupture de la continuité thermique) et pour ne pas être trop petite (afin d'éviter un risque de surchauffe en cas d'éventuelle panne du matelas chauffant, s'il est allumé en permanence).

De plus, pour obtenir la transparence acoustique (ou continuité acoustique) souhaitée, la largeur L4 est déterminée de manière à ce que la surface de la zone perforée 16 ne dégrade pas les performances acoustiques du traitement acoustique. La zone perforée 16 est réalisée pour obtenir une compatibilité entre le taux TSO de la surface de la zone perforée 16 et le taux TSO d'un panneau acoustique 20A et 20B tel que décrit ci-dessous. A cet effet, il peut être avantageux que les perforations 18 de la zone perforée 16 soient oblongues.

De plus, pour permettre le passage des ondes sonores à travers le matelas chauffant 5, la couche protectrice 17 (anti-érosion) est donc également perforée.

Le matelas chauffant 5 des figures 5 et 7 est destiné à être appliqué à la paroi 19 de l'entrée d'air de la nacelle 3 comportant le panneau acoustique 20A, 20B (figure 2).

À titre d'illustration, dans ce mode de réalisation particulier des figures 5 et 7, la largeur L3 (figure 7) des bandes chauffantes 6 du matelas chauffant 5 peut être comprise entre 2 mm et 30 mm, et est de préférence de l'ordre de 6 mm, et la largeur L4 entre deux bandes chauffantes 6 adjacentes, c'est-à-dire la largeur L4 des zones perforées 16, peut être comprise entre 1 et 10 mm et est de préférence de l'ordre de 5 mm.

Dans le cadre de la présente invention, le matelas chauffant peut présenter des formes variées, notamment une forme plane ou une forme arrondie (ou courbe), comme par exemple une sinusoïde, une forme convexe ou une forme concave. En particulier, la forme peut être adaptée au support ou à la zone sur lequel le matelas chauffant doit être appliqué.

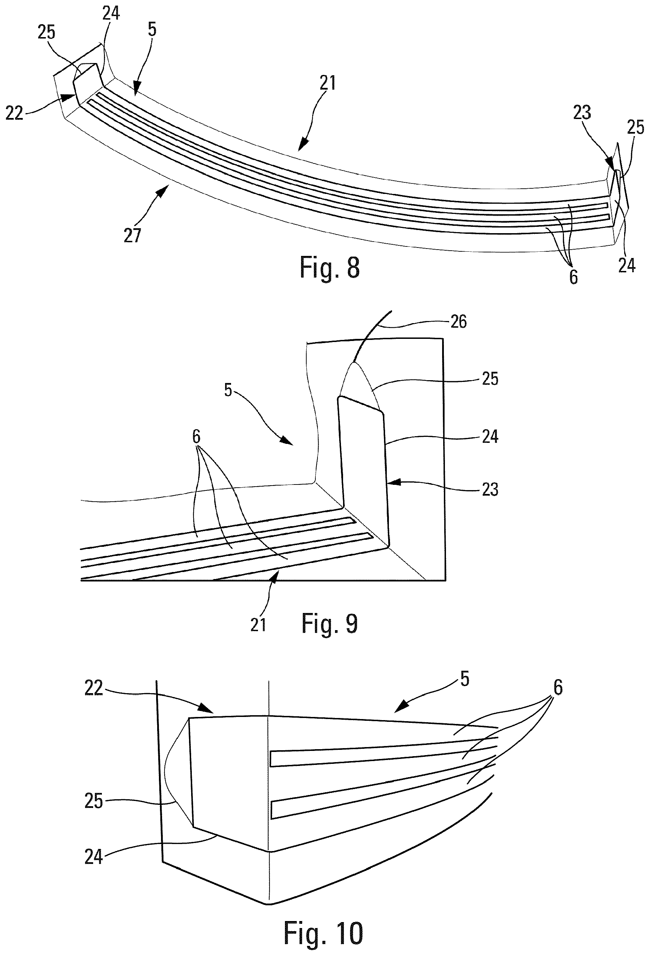

Dans un mode de réalisation préféré, représenté sur la figure 8, le matelas chauffant 5 présente une forme générale en U. Cette forme en U comprend un fond allongé 21, le long d'un axe longitudinal, en vue en plan.

Cette forme en U présente l'avantage, lorsque le matelas chauffant 5 est agencé sur une zone de traitement acoustique (telle que décrite ci-dessous), une optimisation de la continuité du traitement acoustique ainsi qu'un accès à la connectique électrique.

La forme en U comprend, de plus, deux branches d'extrémité 22 et 23, prévues respectivement de part et d'autre dudit fond 21. Ces branches d'extrémité 22 et 23 sont agencées transversalement au fond 21, par exemple sensiblement orthogonalement comme dans l'exemple représenté.

Dans le cadre de la présente invention, les branches d'extrémité 22 et 23 peuvent présenter des angles variés par rapport au fond. De plus, il est envisageable que, pour un même matelas chauffant, les deux branches d'extrémité 22 et 23 présentent des angles respectifs différents par rapport au fond. En particulier, les angles entre les deux branches d'extrémité 22 et 23 et le fond peuvent être adaptés au support (ou à la zone) sur lequel le matelas chauffant doit être appliqué.

En section transversale, le fond 21 est courbe (ou incurvé) comme visible sur la figure 8. De préférence, le fond 21 est incurvé avec un rayon de courbure constant de manière à correspondre à un arc de cercle. Dans l'application de la figure 2, le rayon de l'arc de cercle est égal au rayon de la paroi 19 tubulaire d'une entrée d'air 43 de la nacelle 3 de moteur (figure 2), à l'endroit où doit être monté le matelas chauffant 5.

Le fond allongé 21 est pourvu de la ou des bandes chauffantes 6 du matelas chauffant 5. La ou les résistances sont donc agencées dans le fond 21 du matelas chauffant 5.

De plus, les branches d'extrémité 22 et 23 sont pourvues, chacune, d'au moins un élément de connexion 24 (électrique). Cet élément de connexion 24 est lié à la ou aux résistances de la ou des bandes chauffantes 6 du matelas chauffant 5, ainsi qu'à une alimentation électrique. Les éléments de connexion 24 ont pour but de permettre la connexion des résistances 7 à une alimentation électrique, pour leur fonctionnement.

Par ailleurs, dans un mode de réalisation particulier, à chacun des éléments de connexion 24 est liée une extension métallique 25, comme représenté sur les figures 8 à 10. Chaque extension métallique 25 est agencée entre l'élément de connexion 24 et un fil électrique 26 destiné à l'alimentation électrique, comme représenté sur la figure 9. Ces extensions métalliques 25 sont configurées de manière à pouvoir servir, en cas de surcharge, de fusible, c'est-à-dire à empêcher dans ce cas la transmission du courant électrique vers la ou les résistances 7 du matelas chauffant 5.

Comme indiqué ci-dessus, dans un mode de réalisation préféré, le matelas chauffant 5 comporte une pluralité de bandes chauffantes 6, de préférence trois bandes chauffantes, dont chacune comprend au moins une résistance.

Dans un premier mode de réalisation, chacune des bandes chauffantes 6 du matelas chauffant 5 est alimentée électriquement par une alimentation électrique dédiée. Ainsi, il est possible d'alimenter séparément, ou par l'intermédiaire de courants différents, chacune des bandes chauffantes 6 du matelas chauffant 5.

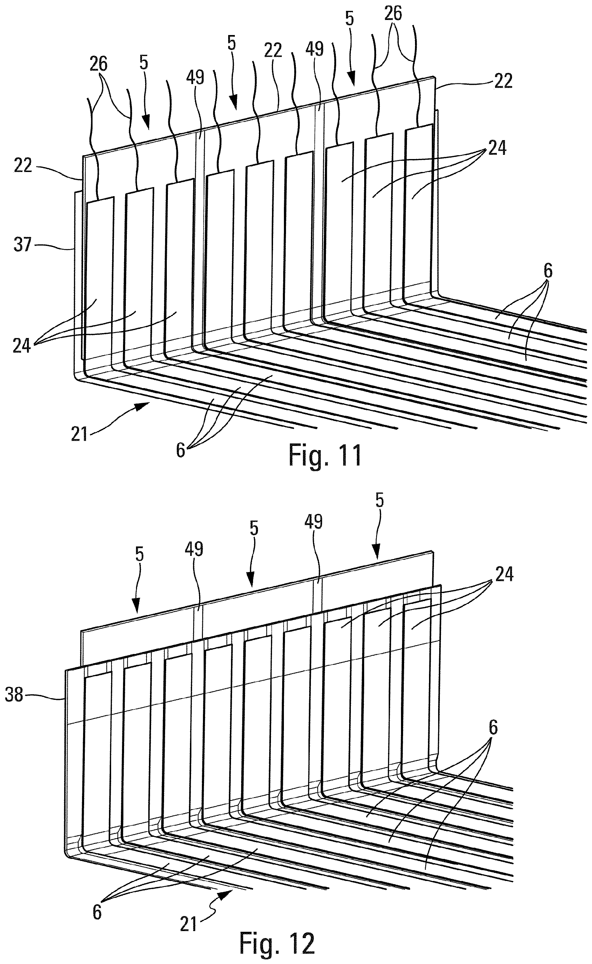

Dans ce premier mode de réalisation, chacune des branches extrémité 22 et 23 comprend une pluralité d'éléments de connexion (électrique) 24 dont chacun est associé à l'une des bandes chauffantes 6 du matelas chauffant 5, comme représenté sur la figure 11. Par conséquent, le courant électrique qui est amené par le fil électrique 26 circule dans le matelas chauffant 5, à partir de l'élément de connexion 24 prévu à l'une des branches d'extrémité, par exemple à la branche d'extrémité 22, en traversant la résistance 7 ou les résistances 7 de la bande chauffante 6 correspondante, et il aboutit à l'élément de connexion 24 prévu à l'autre branche d'extrémité 23 (figure 8) auquel est également lié un fil électrique 26.

Dans une réalisation préférée de ce premier mode de réalisation, le matelas chauffant 5 comporte trois bandes chauffantes 6 dont chacune est alimentée par l'un des trois courants électriques d'un système de courant triphasé. Dans cette réalisation préférée, chacune des branches d'extrémité 22, 23 comporte trois éléments de connexion 24 à chacun desquels est connecté un fil électrique 26, comme représenté pour les branches d'extrémité 22 sur la figure 11 qui montre trois matelas chauffant 5 agencés côte-à-côte.

Par ailleurs, dans un second mode de réalisation, toutes les résistances de l'ensemble des bandes chauffantes 6 du matelas chauffant 5 sont alimentées par la même alimentation électrique. Dans ce second mode de réalisation, chacune des branches extrémité 22, 23 comprend un seul élément de connexion 24 (par exemple une plaque de connexion) qui est lié à l'ensemble des résistances, comme représenté sur les figures 8 à 10 et auquel est par exemple connecté un fil électrique 26 comme représenté sur la figure 9. Dans ce second mode de réalisation, pour alimenter électriquement le matelas chauffant 5, on peut utiliser un courant monophasé ou bien un seul des trois courants d'un système de courant triphasé.

Par ailleurs, dans un mode de réalisation particulier (non représenté), le dispositif de chauffage 1 comporte également une plaque qui est reliée, d'une part, à l'ensemble des matelas chauffants 5 du dispositif de chauffage, et d'autre part, à un élément de structure de l'aéronef, et qui sert à la mise à la masse des matelas chauffants 5.

Par conséquent, la capacité de chauffage d'un matelas chauffant 5, tel que décrit ci-dessus, peut-être adaptée en fonction notamment des caractéristiques des matériaux utilisés pour réaliser la résistance 7, ainsi que le cas échéant en fonction du nombre de couches unidirectionnelles formant la résistance 7. La capacité de chauffage peut également être modifiée et adaptée en fonction de l'intensité de l'alimentation électrique du matelas chauffant 5.

Par ailleurs, sur la figure 11, on a représenté une couche d'isolation thermique 37 externe, par exemple un pli de plastique de type GFRP. De plus, sur la figure 12 qui est similaire à la figure 11, on a représenté une couche d'isolation thermique 38 interne, par exemple également un pli de plastique de type GFRP. En outre, les matelas chauffants 5 adjacents sont séparés les uns des autres par une bandelette 49, par exemple en matériau thermiquement isolant. Les bandelettes 49 peuvent présenter une largeur de 1 à 3 mm.

Le matelas chauffant 5, tel que décrit ci-dessus, est donc destiné à faire partie d'un dispositif de chauffage 1. Le dispositif de chauffage 1 comprend une nappe chauffante 27, 28, 29 formée d'au moins un matelas chauffant 5, comme représenté sur les figures 8, 13 et 14.

Dans un mode de réalisation simplifié, le dispositif 1 comprend une nappe chauffante 27 comportant un seul matelas chauffant 5, tel que celui représenté sur la figure 8 par exemple.

Par ailleurs, dans un mode de réalisation préféré, le dispositif de chauffage 1 comporte une nappe chauffante 28, 29 formée d'une pluralité de matelas chauffants 5. Ces matelas chauffants 5 sont pourvus, chacun, d'un fond 21 incurvé en arc de cercle. Les fonds 21 des matelas chauffants 5 présentent tous le même rayon de courbure , correspondant par exemple au rayon de courbure d'une zone annulaire d'une entrée d'air d'un moteur, au niveau de laquelle doit être montée la nappe chauffante 28, 29. Les matelas chauffants 5 de la nappe chauffante 28, 29 sont liés ensemble, au moins mécaniquement, via leurs branches d'extrémité 22, 23.

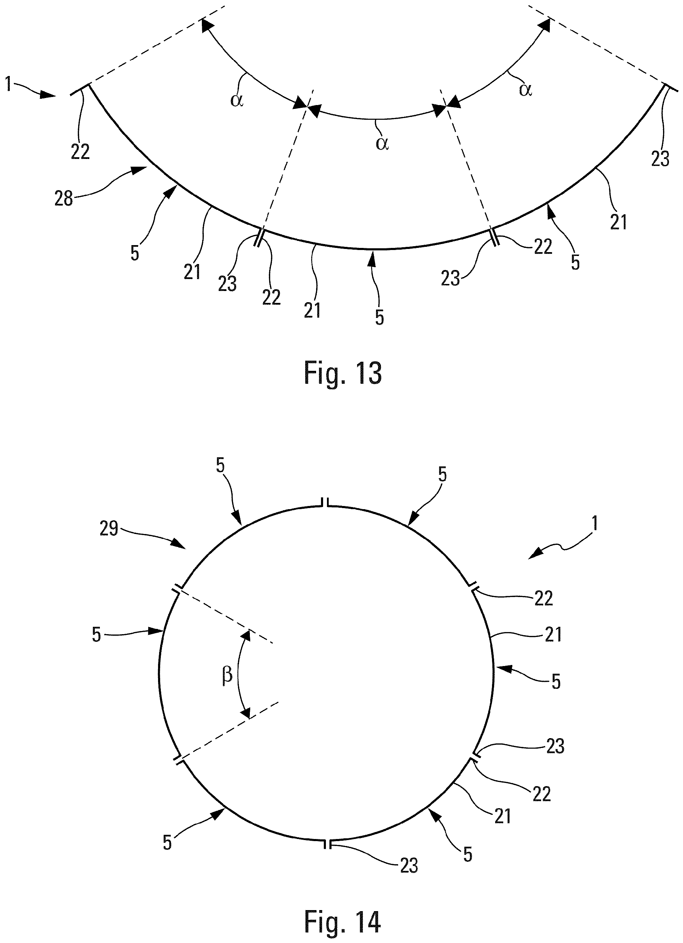

En fonction du nombre d'arcs de cercle considéré (c'est-à-dire du nombre de matelas chauffants 5) et de la valeur angulaire de l'arc de chacun de ces arcs de cercle, on peut obtenir une nappe chauffante 28 formant un arc de cercle (figure 13) avec un arc plus ou moins important ou une nappe chauffante 29 formant un anneau complet (figure 14).

Dans un premier exemple représenté sur la figure 13, le dispositif de chauffage 1 comprend la nappe chauffante 28 comportant trois matelas chauffants 5. Le fond 21 de chacun des matelas chauffants 5 présente un même arc d'angle a, par exemple de 40°, de sorte que la nappe chauffante 28 est étendue le long d'un arc de cercle de 120°.

En outre, dans un second exemple représenté sur la figure 14, le dispositif de chauffage 1 comprend la nappe chauffante 29 comportant six matelas chauffants 5. Le fond 21 de chacun des matelas chauffants 5 présente un même arc d'angle β, par exemple de 60°, de sorte que la nappe chauffante 29 présente une forme annulaire.

L'utilisation de matelas chauffants 5 identiques pour former les nappes chauffantes 28 et 29 permet de simplifier la réalisation et ainsi le coût de ces nappes chauffantes 28 et 29.

Il est également envisageable de prévoir, pour une nappe chauffante, des matelas chauffants présentant des caractéristiques différentes pour pouvoir générer des chauffages différents. Ceci permet notamment de générer des températures de chauffage différentes pour des secteurs angulaires différents, au niveau d'un même tronçon annulaire (c'est-à-dire pour un même positionnement longitudinal).

Quel que soit l'exemple considéré, les matelas chauffants 5 liés mécaniquement ensemble (par des moyens de fixation usuels) peuvent être connectés (ou non) ensemble, électriquement.

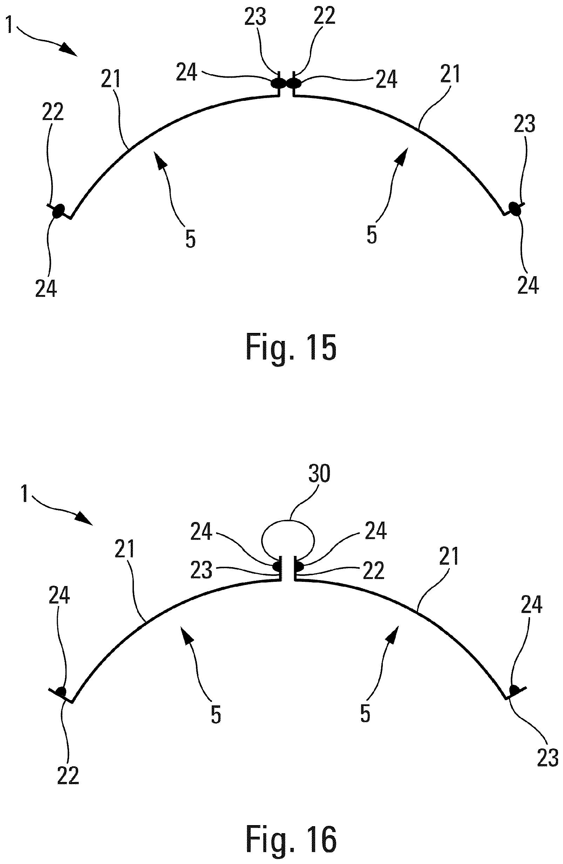

Dans une première réalisation, l'ensemble des matelas chauffants 5 d'un dispositif de chauffage 1 sont liés électriquement ensemble. Cette liaison électrique est réalisée, par exemple, par une mise en contact direct du ou des éléments de connexion 24 d'une branche d'extrémité 22 d'un premier matelas chauffant 5 à l'élément de connexion 24 ou aux éléments de connexion 24 d'une branche d'extrémité 23 d'un second matelas chauffant 5, comme représenté schématiquement sur la figure 15, ladite branche d'extrémité 22 du premier matelas chauffant 5 étant liée mécaniquement à ladite branche d'extrémité 23 du second matelas chauffant 5.

Pour réaliser la connexion électrique, on peut également prévoir, au lieu d'un tel contact direct, une liaison électrique 30, par exemple via un fil électrique, entre le ou les éléments de connexion 24 d'une branche d'extrémité 22 d'un premier matelas chauffant 5 et le ou les éléments de connexion 24 d'une branche d'extrémité 23 d'un second matelas chauffant 5 (adjacent audit premier matelas chauffant 5), comme représenté sur la figure 16.

Ainsi, dans cette première réalisation (figures 15 et 16), la même alimentation électrique est utilisée pour l'ensemble des matelas chauffants 5 (ou les mêmes alimentations électriques sont utilisées, par exemple dans le cas particulier d'une alimentation électrique par bandes chauffantes des matelas chauffants (à pluralité de bandes chauffantes)). Cette première réalisation est simple, puisqu'elle nécessite généralement une seule alimentation électrique pour l'ensemble du dispositif de chauffage 1 qui peut, par exemple, présenter une forme annulaire, comme représenté sur la figure 14.

En outre, dans une deuxième réalisation (non représentée), les matelas chauffants 5 liés mécaniquement ensemble d'un dispositif de chauffage 1 sont isolés électriquement les uns par rapport aux autres. Dans ce cas, les éléments de connexion 24 de deux branches d'extrémité 22 et 23 de deux matelas chauffants 5 adjacents, qui sont liés ensemble mécaniquement, ne sont pas connectés ensemble électriquement.

Dans cette deuxième réalisation, il convient donc de prévoir une alimentation électrique pour chacun des matelas chauffants 5 du dispositif de chauffage 1.

Cette deuxième réalisation permet d'obtenir une grande flexibilité, en prévoyant par exemple des alimentations électriques différentes, et donc des chauffages (ou des cycles de chauffage) différents pour des secteurs angulaires différents au niveau d'un même tronçon annulaire.

Par ailleurs, dans une troisième réalisation (non représentée), appliquée à un dispositif de chauffage 1 comprenant au moins trois matelas chauffants 5 liés ensemble mécaniquement, certains matelas chauffants adjacents peuvent être connectés ensemble électriquement et d'autres matelas chauffants adjacents peuvent être isolés électriquement les uns par rapport aux autres.

Cette troisième réalisation permet de combiner, en partie, les avantages des première et deuxième réalisations précitées.

Quel que soit le mode de réalisation considéré, le dispositif de chauffage 1 comporte, de plus, comme représenté sur la figure 1, au moins une source d'alimentation électrique 31 destinée à alimenter électriquement le ou les matelas chauffants 5 du dispositif de chauffage 1. Cette source d'alimentation électrique 31 peut être une source dédiée ou, de préférence, une source usuelle d'alimentation électrique de l'aéronef.

Le dispositif de chauffage 1 comporte également un contrôleur 32, comme représenté sur la figure 1. La figure 1 s'applique à un dispositif de chauffage 1 particulier, dont la nappe chauffante 27 comporte un unique matelas chauffant 5 à trois bandes chauffantes 6, tel que celui représenté par exemple sur la figure 8, ou plusieurs matelas chauffants à trois bandes chauffantes (qui sont liés ensemble électriquement). Chaque bande chauffante du ou des matelas chauffants est alimentée par une alimentation électrique dédiée. Dans cet exemple, les trois alimentations électriques fournies respectivement par l'intermédiaire de liaisons électriques 35A, 35B et 35C peuvent correspondre aux trois courants électriques différents d'un système de courant triphasé.

Le contrôleur 32 est lié à la source d'alimentation électrique 31, comme représenté sur la figure 1.

De plus, le contrôleur 32 est lié à un système de commande 33, par exemple un système de gestion et de traitement de données de l'aéronef, et il est configuré pour recevoir soit des données, soit des ordres de commande de ce système de commande 33, par l'intermédiaire d'une liaison 34, par exemple un bus de type AFDX.

Le contrôleur 32 est configuré pour commander l'alimentation électrique des bandes chauffantes 6, alimentées respectivement par l'intermédiaire de liaisons 36A, 36B et 36C. Cette commande peut être réalisée soit en fonction d'ordres de commande reçus du système de commande 33, soit en fonction des résultats de traitements de données réalisés par le contrôleur 32 sur la base de données reçues du système de commande 33.

Le dispositif de chauffage 1, tel que décrit ci-dessus, peut, selon le mode de réalisation considéré, être configuré pour réaliser le même chauffage sur toute une zone annulaire d'une nacelle ou pour réaliser le même chauffage sur un arc de cercle, de valeur d'arc appropriée. Il est également envisageable de réaliser, avec un seul et même dispositif de chauffage 1 (à pluralité de matelas chauffants 5), des chauffages différenciés dans des arcs de cercle adjacents.

Le dispositif de chauffage 1 à matelas chauffant, tel que décrit ci-dessus, fait partie d'un système 2 de protection contre le givre d'une nacelle 3, représentée partiellement sur la figure 2, d'un moteur 4 d'un aéronef AC (figure 3), en particulier d'un avion de transport.

De façon usuelle, la nacelle 3 du moteur 4 présente une forme annulaire définie autour d'un axe longitudinal X-X.

La nacelle 3 encercle une entrée d'air 43 par laquelle pénètre un écoulement d'air comme illustré par une flèche E. La nacelle 3 comporte, de façon générale, une lèvre 44, suivie le long de l'axe longitudinal X dans le sens de la flèche E, d'une pièce tubulaire 45 d'entrée d'air et d'une pièce tubulaire moteur (non représentée). La lèvre 44 comprend une paroi en forme de U dont l'ouverture est orientée vers l'arrière (en aval du sens de la flèche E) et dont le fond forme un bord d'attaque de la lèvre. La lèvre 44 s'étend de part et d'autre du bord d'attaque, le long d'une face extérieure orientée vers l'extérieur et en contact avec l'air extérieur et d'une face intérieure orientée vers l'entrée d'air 43. La pièce tubulaire 45 d'entrée d'air comporte, quant à elle, une paroi qui s'étend entre la lèvre 44 et la pièce tubulaire moteur (non représentée).

La nacelle 3 est pourvue, en outre, d'un système 2 de protection contre le givre comprenant au moins un dispositif d'antigivrage et un dispositif de dégivrage.

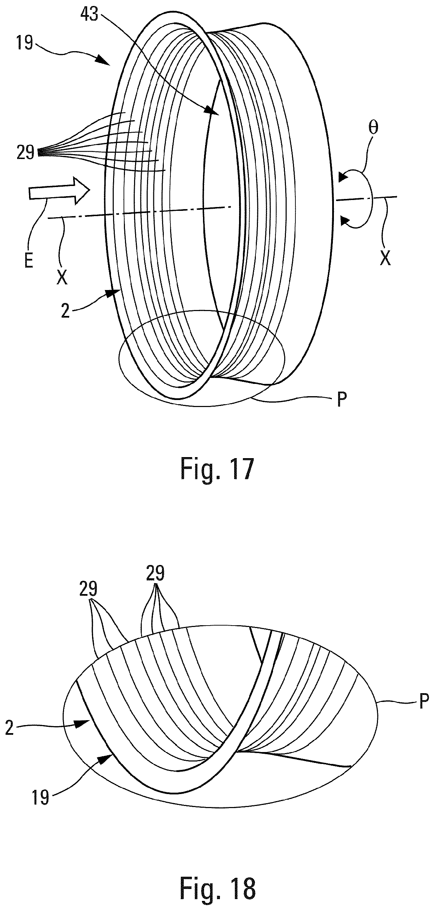

Dans un mode de réalisation préféré, comme représenté à titre d'exemple sur les figures 17 et 18, le système 2 comporte une pluralité de dispositifs de chauffage 1. Dans l'exemple des figures 17 et 18, la figure 18 correspondant à une partie P basse agrandie de la figure 17, le système 2 comporte sept dispositifs de chauffage 1 pourvus chacun d'une nappe chauffante 29 de type annulaire, qui sont agencés sur la paroi 19 de l'entré d'air 43. La paroi 19 de l'entrée d'air 43 peut être réalisée en une seule pièce tubulaire ou en plusieurs sections assemblées ensemble. Les nappes chauffantes 29 sont agencées les unes à côté des autres le long de l'axe longitudinal X-X.

Il est envisageable que les nappes chauffantes 29 soient identiques et réalisent un même chauffage. Toutefois, dans un mode de réalisation préféré, au moins certaines des nappes chauffantes 29 sont différentes, de manière à pouvoir réaliser des chauffages de températures différentes et/ou de cycles de chauffage différents.

Il est, par conséquent, possible de modifier le chauffage (et donc le dégivrage et/ou l'antigivrage) le long de l'axe longitudinal X-X, en prévoyant par exemple plusieurs secteurs longitudinaux, dont chacun comprend un chauffage particulier, notamment concernant la température générée et/ou le temps de chauffage. Comme indiqué ci-dessus, la capacité de chauffage d'un matelas chauffant 5 peut être adaptée au besoin, notamment en fonction des caractéristiques des matériaux utilisés pour réaliser la résistance, en fonction du nombre de couches unidirectionnelles formant la résistance et/ou en fonction de l'intensité de l'alimentation électrique du matelas chauffant 5.

Par ailleurs, comme également indiqué ci-dessus, notamment en référence aux figures 13 et 14, on peut également prévoir des chauffages (ou des cycles de chauffage) différents pour des secteurs angulaires différents au niveau d'un même tronçon annulaire (c'est-à-dire pour un même positionnement longitudinal, selon l'axe longitudinal X-X).

Par conséquent, le chauffage (et donc le dégivrage et l'antigivrage) peut être différencié, à la fois, selon l'axe longitudinal X-X (en prévoyant des secteurs longitudinaux de chauffages différents) et autour de l'axe longitudinal X-X (en prévoyant des secteurs angulaires de chauffages différents, autour (flèche 8 de la figure 17) de l'axe longitudinal X-X).

Dans l'exemple des figures 17 et 18, les nappes chauffantes 29 comprennent donc chacun une forme annulaire.

Bien entendu, il est également envisageable de prévoir des nappes chauffantes successives selon l'axe longitudinal X-X, dont au moins certaines ou toutes présentent un arc de cercle de valeur angulaire inférieure à 360°. Dans ce cas, les arcs de cercle successifs peuvent avoir la même valeur angulaire et être situés à la même position autour de l'axe longitudinal X-X. Il est toutefois également envisageable que les arcs de cercle présentent des valeurs angulaires différentes et/ou sont agencés à des positions différentes autour de l'axe longitudinal X-X.

Par ailleurs, dans l'exemple des figures 17 et 18, les nappes chauffantes sont directement adjacentes les unes des autres. En effet, elles sont généralement uniquement séparées entre elles par des bandelettes 49, comme représenté sur les figures 11 et 12. En variante, il est également envisageable de prévoir des nappes chauffantes successives qui ne sont pas directement adjacentes, mais situées à des positions éloignées les unes des autres le long de l'axe longitudinal X-X.

On sait qu'une entrée d'air et particulièrement une lèvre d'entrée d'air présentent une forme complexe non développable. Le mode de réalisation particulier du matelas chauffant 5, tel que décrit ci-dessus, avec une pluralité de bandes chauffantes 6, par exemple trois bandes chauffantes 6, présente l'avantage de pouvoir facilement draper une telle forme complexe. En effet, un tel matelas chauffant 5 (qui comprend entre les bandes chauffantes 6 des zones isolantes 15 ou des zones perforées 16, selon le mode de réalisation envisagé) présente, grâce à ces zones 15 et 16, une certaine souplesse qui permet de l'appliquer plus facilement à une telle forme complexe. Comme indiqué ci-dessus, les zones isolantes 15 et les zones perforées 16 sont des zones de discontinuité contrôlée. Bien entendu, cet avantage d'un matelas chauffant 5 à plusieurs bandes chauffantes 6 existe lors de son application à toute forme complexe, et pas seulement à une forme complexe d'une entrée d'air.

Pour la commande des différents dispositifs de chauffage 1 du système 2, ce dernier comporte, dans un premier mode de réalisation, un seul contrôleur, tel que par exemple le contrôleur de 32 de la figure 1, qui est alors destiné à la commande de l'ensemble des dispositifs de chauffage 1.

En outre, dans un second mode de réalisation, le système 2 peut comporter une pluralité de contrôleurs, tels que par exemple le contrôleur 32 de la figure 1, dont chacun est dédié à un dispositif de chauffage 1, c'est-à-dire commande l'alimentation électrique du dispositif de chauffage 1 correspondant.

Dans une variante de réalisation (non représentée de ce second mode de réalisation), l'ensemble des contrôleurs ou des fonctions mises en oeuvre par les contrôleurs peuvent être intégrés dans un seul et même système de contrôle. Ce système de contrôle est donc configuré pour commander l'alimentation électrique de l'ensemble des matelas chauffants 5 du système 2.

Par ailleurs, dans un mode de réalisation préféré, le système 2 de protection contre le givre comporte, à la fois, au moins un dispositif d'antigivrage et au moins un dispositif de dégivrage.

On sait qu'un dispositif d'antigivrage réalise un chauffage continu pour empêcher la formation de glace.

En outre, un dispositif de dégivrage réalise un chauffage non continu, généralement conformément à un cycle de chauffe donné, permettant dans un premier temps la formation de givre, puis dans un second temps son décollement. Le givre ainsi décollé est aspiré par l'entrée d'air de la nacelle vers l'ensemble moteur intégré dans la nacelle.

Dans un mode de réalisation préféré, l'ensemble des dispositifs d'antigivrage et de dégivrage du système 2 correspondent, chacun, à au moins un dispositif de chauffage 1 tel que celui décrit ci-dessus.

Dans l'exemple de la figure 2, le système 2 peut comporter, dans une réalisation particulière, trois secteurs longitudinaux différents, le long de la lèvre 44 et de la pièce tubulaire 45, à savoir :
- un premier secteur S1, au niveau de la lèvre 44, entre un point 39 externe et un point 40 interne ;
- un deuxième secteur S2 entre le point 40 et un point 41 plus en aval dans le sens de la flèche E ; et
- un troisième secteur S3, au niveau de de la pièce tubulaire 45, entre le point 41 et un point 42 plus en aval dans le sens de la flèche E.

Dans une réalisation particulière de ce mode de réalisation préféré, le système 2 peut être tel que :
- au niveau du secteur S1, le ou les dispositifs de chauffage 1 dudit système 2 mettent en oeuvre une fonction d'antigivrage ;
- au niveau du secteur S2, le ou les dispositifs de chauffage 1 dudit système 2 mettent en oeuvre une fonction de dégivrage ; et
- au niveau du secteur S3, le ou les dispositifs de chauffage 1 dudit système 2 mettent également en oeuvre une fonction de dégivrage.

Bien entendu, en plus de cette sectorisation longitudinale (selon les secteurs S1, S2 et S3), le système 2 comprend également, de préférence, une sectorisation angulaire (c'est-à-dire des chauffages différents angulairement autour de l'axe longitudinal X-X), pour au moins certains des secteurs S1 à S3 et de préférence pour l'ensemble des secteurs S1 à S3.

Par ailleurs, dans un mode de réalisation particulier, la nacelle 3 comporte en outre au moins un panneau d'atténuation acoustique (ou panneau acoustique). Dans l'exemple de la figure 2, la nacelle 3 comporte deux panneaux acoustiques 20A et 20B adjacents. Le panneau acoustique 20A est installé au niveau du secteur S2 et le panneau acoustique 20B est installé au niveau du secteur S3.

De façon usuelle, les panneaux acoustiques 20A et 20B comprennent, chacun, une structure acoustique 46 présentant des propriétés d'absorption acoustique, notamment pour les fréquences des bruits les plus gênants. Cette structure acoustique 46 permet de réduire les bruits environnants, par exemple en emprisonnant et/ou en amortissant les ondes sonores (ou ondes acoustiques). Cette structure acoustique 46 utilisée pour l'absorption acoustique peut être en matériau alvéolaire, mais également dans un matériau à base de mousse ou dans un matériau fibreux. Le panneau acoustique 20A, 20B est également muni sur l'une de ses deux faces d'une peau poreuse 47 (à savoir perforée) dite résistive et, sur l'autre face, d'une peau arrière 48 dite réflective, non perforée. La peau poreuse 47 permet aux ondes sonores de pénétrer dans la structure acoustique 46 où elles sont atténuées. La peau poreuse 47 est située du côté où les ondes acoustiques à atténuer se propagent, à savoir du côté de l'entrée d'air 43.

Dans l'exemple de la figure 2, les panneaux acoustiques 20A et 20B se différencient entre eux, notamment par les caractéristiques de leur structure acoustique 46, et elles sont configurées pour atténuer des ondes acoustiques de fréquences différentes. Plus précisément, le panneau acoustique 20A est apte à atténuer des ondes acoustiques de fréquences plus basses que celles des ondes acoustiques atténuées par le panneau acoustique 20B.

Dans ce mode de réalisation particulier de la figure 2, la peau poreuse 47 de chacun des panneaux acoustiques 20A et 20B comprend un matelas chauffant 5 ou plusieurs matelas chauffants 5, dont chacun comprend des zones perforées 16 telles que représentées sur les figures 5 et 7. Les ondes acoustiques à atténuer traversent les perforations 18 de ces zones perforées 16 pour pénétrer dans la structure acoustique 46 où elles sont atténuées. Ce ou ces matelas chauffants 5 ont donc une double fonction, à savoir d'une part réaliser un chauffage et d'autre part permettre le passage des ondes acoustiques à atténuer.

Comme représenté schématiquement sur la figure 2, la forme de la cellule 50 la plus en avant du panneau acoustique 20A est adaptée à la forme sur laquelle le panneau acoustique 20A est appliqué. Les branches d'extrémité 22 et 23 du matelas chauffant 5 sont ainsi également adaptées à la structure sur laquelle le matelas chauffant 5 est appliqué.

## Revendications

1. Matelas chauffant pour un dispositif de chauffage, en particulier d'un système de protection contre le givre, comportant une pluralité de bandes chauffantes (6) adjacentes, dont chacune est pourvue d'au moins une résistance (7) noyée dans un matériau thermiquement et électriquement isolant (8) et configurée pour être alimentée électriquement,
**caractérisé en ce qu'**au moins certaines des bandes chauffantes (6) adjacentes sont séparées les unes des autres par des zones isolantes (15) correspondant à des zones de discontinuité thermique contrôlée, chacune desdites zones isolantes (15) présentant une largeur (L2) prédéterminée pour la rendre transparente d'un point de vue thermique.

2. Matelas chauffant selon la revendication 1,
**caractérisé en ce qu'**il comprend un fond (21) allongé pourvu des bandes chauffantes (6) et, à chaque extrémité, au moins un élément de connexion électrique (24) lié aux résistances (7) des bandes chauffantes (6).

3. Matelas chauffant selon la revendication 2,
**caractérisé en ce qu'**il présente une forme arrondie ou une forme plane.

4. Matelas chauffant selon l'une quelconque des revendications précédentes,
**caractérisé en ce que** chacune desdites bandes chauffantes (6) présente au moins l'une des caractéristiques suivantes :
- elle comporte, sur une face avant, une couche protectrice (14, 17) qui présente une conductivité thermique et qui sert de protection contre l'érosion ;
- elle comporte, sur une face arrière, une couche (13) structurelle et d'isolation thermique ;
- la résistance (7) est formée d'au moins un pli unidirectionnel de fibres ou de bande métallique ; et
- le matériau thermiquement et électriquement isolant (8) est un composite renforcé à base de verre ou d'aramide.

5. Matelas chauffant selon l'une quelconque des revendications précédentes,
**caractérisé en ce qu'**au moins certaines des bandes chauffantes (6) adjacentes sont séparées les unes des autres par des zones perforées (16) correspondant à des zones de discontinuités contrôlée, chacune desdites zones perforées (16) étant pourvue de perforations (18) aptes à laisser passer des ondes acoustiques au travers du matelas chauffant (5) et présentant une largeur (L4) prédéterminées pour la rendre, à la fois, transparente d'un point de vue thermique et transparente d'un point de vue acoustique.

6. Dispositif de chauffage à matelas chauffant pour un système de protection contre le givre,
**caractérisé en ce qu'**il comporte au moins un matelas chauffant (5) selon l'une quelconque des revendications 1 à 5.

7. Dispositif de chauffage selon la revendication 6,
**caractérisé en ce qu'**il comporte une pluralité de matelas chauffants (5) pourvus chacun d'un fond courbe (21), les matelas chauffants (5) étant liés ensemble via leurs branches d'extrémité (22, 23).

8. Dispositif de chauffage selon la revendication 7,
**caractérisé en ce qu'**au moins certains des matelas chauffants (5) liés ensemble via leurs branches d'extrémité (22, 23) :
- sont connectés électriquement ; ou
- sont isolés électriquement les uns par rapport aux autres.

9. Dispositif de chauffage selon l'une des revendications 6 à 8, **caractérisé en ce qu'**au moins certains des matelas chauffants (5) comprennent trois bandes chauffantes (6), et **en ce que** chacune desdites bandes chauffantes (6) est alimentée par l'un des trois courants électriques d'un système de courant triphasé.

10. Dispositif de chauffage l'une quelconque des revendications 6 à 9, **caractérisé en ce qu'**il comporte, de plus, au moins une source d'alimentation électrique (31) et au moins un contrôleur (32), le contrôleur (32) étant lié à la source d'alimentation électrique (31) et étant configuré pour commander l'alimentation électrique du ou des matelas chauffants (5).

11. Système de protection contre le givre, en particulier d'une nacelle de moteur d'aéronef,
**caractérisé en ce qu'**il comporte au moins un dispositif de chauffage (1) à matelas chauffant selon l'une quelconque des revendications 7 à 11.

12. Système selon la revendication 11,
**caractérisé en ce qu'**il comporte une pluralité de dispositifs de chauffage (1) agencés côte à côte.

13. Nacelle pour moteur d'aéronef,
**caractérisée en ce qu'**elle comporte au moins un système (2) de protection contre le givre selon l'une quelconque des revendications 11 et 12.

14. Nacelle selon la revendication 13,
**caractérisée en ce qu'**elle comporte au moins un panneau d'atténuation acoustique (20A, 20B) comprenant au moins une structure acoustique (46) pourvue d'une peau poreuse (47) , et **en ce que** ladite peau poreuse (47) comporte au moins un matelas chauffant (5).
